# EUROPEAN PATENT APPLICATION

(11) **EP 2 434 567 A2**
(43) Date of publication of application: **28.03.2012**
(21) Application number: 11195570.4
(22) Date of filing: 18.07.2007
(51) Int. Cl.: H01M 6/40, H01M 10/04

(54) **Method and apparatus for solid-state microbattery photolithographic manufacture, singulation and passivation**

(30) Priority: 18.07.2006 US 80771306 P
(62) Divisional of application: 07810572.3
(71) Applicant: Cymbet Corporation, Elk River, MN 55330 (US)
(72) Inventor: Wallace, Mark A., Big Lake, MN Minnesota 55309 (US); Klaassen, Jody J., Minneapolis,, MN Minnesota 55409 (US); Sather, Jeffrey J., Otsego,, MN Minnesota 55309 (US); Shakespeare, Stuart, Mayer, MN Minnesota 55360 (US)
(74) Representative: Vossius & Partner

(57) **Abstract**

A method comprising providing a first sheet that includes a substrate, a cathode current collector, a cathode material, an anode current collector, and an electrolyte layer separating the cathode material from the anode current collector; and performing one or more material removal operations to remove material through the cathode current collector, cathode material, the anode current collector, and the electrolyte layer separating the cathode material from the anode current collector, and removing a first portion of the substrate but not through a second portion of the substrate so as to leave a first plurality of battery cells that are separated from one another but wherein a plurality of the first plurality of battery cells remains attached to at least a single unseparated part of the first sheet, whereby sufficient amounts of the substrate are removed so that final separation of the cells may be accomplished by upward or downward force on individual cells.

## Description

This application claims the benefit of U.S. Provisional Application Serial No. 60/807,713, filed July 18, 2006, entitled "METHOD AND APPARATUS FOR SOLID-STATE MICROBATTERY PHOTOLITHOGRAPHIC SINGULATION AND PASSIVATION FROM A SUBSTRATE" which application is incorporated herein by reference in its entirety.

### FIELD OF THE INVENTION

This invention relates to the field of solid-state energy-storage devices, and more specifically to a method and apparatus for making solid-state batteries and singulating the devices (mostly separating from each other while optionally leaving small connections to the surrounding waste substrate, or completely separating the devices) and creating passivation around the battery devices, e.g., lithium battery devices with a LiPON electrolyte, wherein the battery devices also optionally include LIPON as a passivation and protective barrier, the resulting cell(s), device(s) and/or battery(s).

### BACKGROUND OF THE INVENTION

Electronics have been incorporated into many portable devices such as computers, mobile phones, tracking systems, scanners, etc. One drawback to portable devices is the need to include the power supply with the device. Portable devices typically use batteries as power supplies. Batteries must have sufficient capacity to power the device for at least the length of time the device is in use. Sufficient battery capacity can result in a power supply that is quite heavy and/or large compared to the rest of the device. Accordingly, smaller and lighter batteries (i.e., power supplies) with sufficient energy storage are desired. Other energy storage devices, such as supercapacitors, and energy conversion devices, such as photovoltaics and fuel ceils, are alternatives to batteries for use as power supplies in portable electronics and non-portable electrical applications.

Another drawback of conventional batteries is the fact that some are fabricated from potentially toxic materials that may leak and be subject to governmental regulation. Accordingly, it is desired to provide an electrical power source that is safe, solid-state and rechargeable over many charge/discharge life cycles.

One type of an energy-storage device is a solid-state, thin-film battery. Examples of thin-film batteries are described in U.S. Patent Nos. 5,314,765; 5,338,625; 5,445,906; 5,512,147; 5,561,004; 5,567,210; 5,569,520; 5,597,660; 5,612,152; 5,654,084; and 5,705,293, each of which is herein incorporated by reference. U.S. Patent No. 5,338,625 describes a thin-film battery, especially a thin-film microbattery, and a method for making same having application as a backup or first integrated power source for electronic devices. U.S. Patent No. 5,445,906 describes a method and system for manufacturing a thin-film battery structure formed with the method that utilizes a plurality of deposition stations at which thin battery component films are built up in sequence upon a web-like substrate as the substrate is automatically moved through the stations.

U.S. Patent 6,805,998 (which is incorporated herein by reference) issued October 19, 2004, by Mark L. Jenson and Jody J. Klaassen, and is assigned to the assignee of the present invention described a high-speed low-temperature method for depositing thin-film lithium batteries onto a polymer web moving through a series of deposition stations.

U.S. Patent Application 10/895,445 entitled "LITHIUM/AIR BATTERIES WITH LIPON AS SEPARATOR AND PROTECTIVE BARRIER AND METHOD" (which is incorporated herein by reference) describes a method for making lithium batteries including depositing LiPON on a conductive substrate (e.g., a metal such as copper or aluminum) by depositing a chromium adhesion layer on an electrically insulating layer of silicon oxide by vacuum sputter deposition of 500Å of chromium followed by 5000Å of copper. In some embodiments, a thin film of LiPON (Lithium Phosphorous OxyNitride) is then formed by low-pressure (<10 mtorr) sputter deposition of lithium orthophosphate (Li3PO4) in nitrogen. In some embodiments of the Li-air battery cells, LiPON was deposited over the copper anode contact to a thickness of 2.5 microns, and a layer of lithium metal was formed onto the copper anode contact by electroplating though the LiPON layer in a propylene carbonate/LiPF6 electrolyte solution. In some embodiments, the air cathode was a carbon powder/ polyfluoroacrylate-binder coating (Novec-1700) saturated with a propylene carbonate/LiPF6 organic electrolyte solution. In other embodiments, a cathode-contact layer having carbon granules is deposited, such that atmospheric oxygen could operate as the cathode reactant. This configuration requires providing air access to substantially the entire cathode surface, limiting the ability to densely stack layers for higher electrical capacity (i.e., amp-hours).

US Patent Application Publication No. 20070067984 describes a method for producing a lithium microbattery, wherein the electrolyte containing a lithiated compound is formed by successively depositing an electrolytic thin film, a first protective thin film that is chemically inert in relation to the lithium, and a first masking thin film on a substrate provided with current collectors and a cathode. As stated therein at paragraph [0033], "At the present time, the elements constituting the lithium microbattery containing lithiated compounds that are very sensitive to oxygen, nitrogen and water can not be formed with the techniques implemented to produce the collectors 2a 2b the cathode 3 and in particular by photolithography by etching."

There is a need for producing rechargeable lithium-based batteries with improved manufacturability, density, and reliability, and lowered cost.

### SUMMARY OF THE INVENTION

A method for producing a thin film lithium battery is provided, comprising applying a cathode current collector, a cathode material, an anode current collector, and an electrolyte layer separating the cathode material from the anode current collector to a substrate, wherein at least one of the layers contains lithiated compounds. In this method, the configuration of at least one of the layers containing lithiated compounds is patterned at least in part by a photolithography operation comprising removal of a photoresist material from the layer containing lithiated compounds by a process including a wet chemical treatment.

Contrary to the teachings of the prior art, it has been found that thin film lithium batteries can be prepared using photolithographic operations using wet chemical treatments. The methods as described herein provide efficient and economical manufacturing of these devices with a reduced number of steps, using less complicated equipment as compared to prior art manufacturing techniques. Thus, the present process for making thin film lithium batteries can preferably be carried out without using extra protective layers in addition to photolithographic masking materials that can be removed using wet chemical treatments.

In another aspect, the present invention includes a method and apparatus for making lithium batteries by providing a first sheet that includes a substrate having a cathode material, an anode current collector, an optional anode material, and a LiPON barrier/electrolyte layer separating the cathode material from the anode current collector; and laser ablating or by performing one or more one or more material removal operations on a subset of first material to separate a plurality of cells from the first sheet. In some embodiments, the method further includes depositing second material on the sheet to cover the plurality of cells; and performing one or more one or more material removal operations on a subset of second material to separate a plurality of cells from the first sheet. The one or more material removal operations may be laser ablating or by performing one or more photolithography operations, or a combination thereof.

### BRIEF OF THE DRAWINGS

FIG. 1A is a schematic cross-section view of a partially manufactured layered structure 100A for making a solid-state cell of some embodiments of the invention.
FIG. 1B is a schematic cross-section view of a layered structure 100B for making a solid-state cell of some embodiments of the invention.
FIG. 2A is a schematic cross-section view of an ablated layered structure 200A for making a solid-state cell of some embodiments of the invention.
FIG. 2B is a schematic cross-section view of an ablated layered structure 200B for
   making a solid-state cell of some embodiments of the invention.
FIG. 3A is a schematic cross-section view of an ablated and filled solid-state-cell-inprocess 300A of some embodiments of the invention.
FIG. 3B is a schematic cross-section view of an ablated and filled solid-state-cell-inprocess 300B for making a solid-state of some embodiments of the invention.
FIG. 4A is a schematic cross-section view of a re-ablated solid-state cell 400A of some embodiments of the invention.
FIG. 4B is a schematic cross-section view of a re-ablated solid-state cell 400B of some embodiments of the invention.
FIG. 5 is a schematic top-down view of a re-ablated solid-state cell 500 of some embodiments of the invention.
FIG. 6 is a schematic cross-section view of a partially manufactured layered structure 600 for making a solid-state cell of some embodiments of the invention.
FIG. 7 is a schematic cross-section view of an ablated layered structure 700 for making a solid-state cell of some embodiments of the invention.
FIG. 8 is a schematic cross-section view of an ablated and filled solid-state-cell-inprocess 800 of some embodiments of the invention. In some embodiments, fill material 810 is a metal such as copper or aluminum or the like.

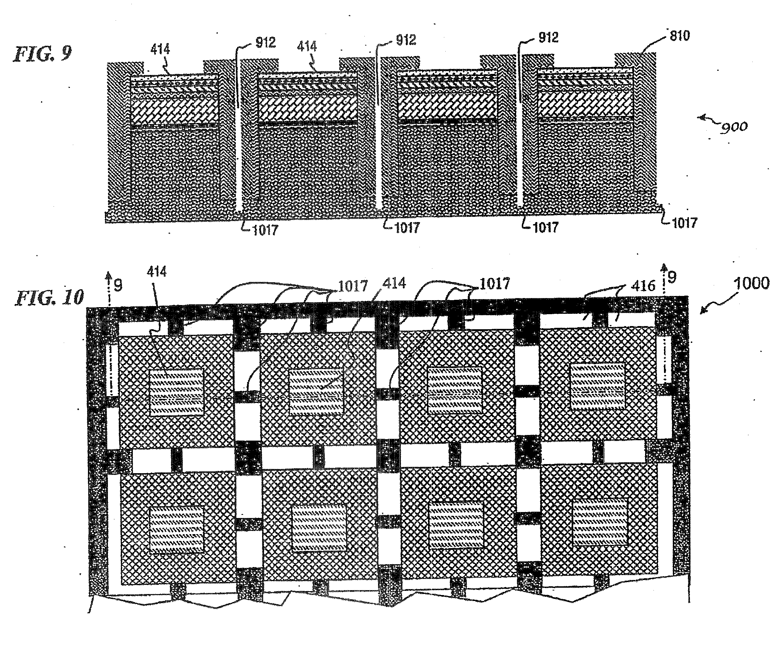

FIG. 9 is a schematic cross-section view of a solid-state-cell-in-process 900 of some embodiments of the invention. In some embodiments, fill material 810 is ablated in channels 812, leaving a thin layer of material 810. In some embodiments, the substrate is moved back into the laser ablation system or dicing saw for contact definition and cell separation. In some embodiments, the laser or dicing saw ablates the through the layers of passivation material to the contact on the top of each cell (Figure 9). Following the contact definition, the laser is set at a percentage (less than 100 percent) of the original ablation kerf width. The beam ablates through the passivation material and through the substrate with the exception of small support tabs 1017 in the corners, and an opening center of each cell side (Figure 10).
FIG. 10 is a schematic cross-section view of a solid-state-cell-in-process 1000 of some embodiments of the invention. In some embodiments, the cells remain in the substrate though post ablation operations. Final separation of the cells is accomplished by upward or downward force on individual cells through a pick and place system.
FIG. 11 is a schematic cross-section view of a solid-state-cell-in-process 1100 of some embodiments of the invention after a blanket cell process. In cells where both contacts are accessed through the top of the cell; the process is similar to those described above with the exception of the ablation definition.
FIG. 12 is a schematic cross-section view of a solid-state-cell-in-process 1200 showing cell and top side contacts defined through ablation.
FIG. 13 is a schematic cross-section view of a solid-state-cell-in-process 1300 showing a first layer of passivation applied.
FIG. 14 is a schematic cross-section view of a solid-state-cell-in-process 1400 showing a first layer of passivation material is ablated to uniformly cover the cell.
FIG. 15 is a schematic cross-section view of a solid-state-cell-in-process 1500 showing additional layer(s) of passivation material is applied (metal).
FIG. 16 is a schematic cross-section view of a solid-state-cell-in-process 1600 showing contact areas of the cell are ablated and the cells are ablated with the exception of substrate support tabs.
FIG. 17 is a schematic top view of a solid-state-cell-in-process 1700 showing a top view of cells with contact pads identified and support tabs identified.
FIG. 18 is a schematic cross-section view of a solid-state-cell 1800 prepared by the present method.

### DESCRIPTION OF PREFERRED

In the following detailed description of the embodiments, reference is made to the accompanying drawings that form a part hereof, and in which are shown by way of illustration specific embodiments in which the invention may be practiced. It is understood that other embodiments may be utilized and structural changes may be made without departing from the scope of the present invention.

The leading digit(s) of reference numbers appearing in the Figures generally correspond to the Figure number in which that component is first introduced, such that the same reference number is used throughout to refer to an identical component which appears in multiple Figures. Signals (such as, for example, fluid pressures, fluid flows, or electrical signals that represent such pressures or flows), pipes, tubing or conduits that carry the fluids, wires or other conductors that carry the electrical signals, and connections may be referred to by the same reference number or label, and the actual meaning will be clear from its use in the context of the description.

### TERMINOLOGY

In this description, the term metal applies both to substantially pure single metallic elements and to alloys or combinations of two or more elements, at least one of which is a metallic element.

The term substrate or core generally refers to the physical structure that is the basic work piece that is transformed by various process operations into the desired microelectronic configuration. In some embodiments, substrates include conducting material (such as copper, stainless steel, aluminum and the like), insulating material (such as sapphire, ceramic, or plastic/polymer insulators and the like), semiconducting materials (such as silicon), nonsemiconducting, or combinations of semiconducting and non-semiconducting materials. In some other embodiments, substrates include layered structures, such as a core sheet or piece of material (such as iron-nickel alloy and the like) chosen for its coefficient of thermal expansion (CTE) that more closely matches the CTE of an adjacent structure such as a silicon processor chip. In some such embodiments, such a substrate core is laminated to a sheet of material chosen for electrical and/or thermal conductivity (such as a copper, aluminum alloy and the like), which in turn is covered with a layer of plastic chosen for electrical insulation, stability, and embossing characteristics. An electrolyte is a material that conducts electricity by allowing movement of ions (e.g., lithium ions having a positive charge) while being non-conductive to electrons. An electrical cell or battery is a device having an anode and a cathode that are separated by an electrolyte. A dielectric is a material that is non-conducting to electricity, such as, for example, plastic, ceramic, or glass. In some embodiments, a material such as LiPON can act as an electrolyte when a source and sink for lithium are adjacent the LiPON layer, and can also act as a dielectric when placed between two metal layers such as copper or aluminum, which do not form ions that can pass through the LiPON. In some embodiments, devices include an insulating plastic/polymer layer (a dielectric) having wiring traces that carry signals and electrical power horizontally, and vias that carry signals and electrical power vertically between layers of traces.

The term vertical is defined to mean substantially perpendicular to the major surface of a substrate. Height or depth refers to a distance in a direction perpendicular to the major surface of a substrate.

The term "layer containing lithiated compounds" is defined to mean a layer that contains lithium in any form, including metallic lithium, alloys of lithium and lithium containing compounds. Examples of layers containing lithiated compounds include the anode, particularly in the case of metallic lithium, the electrolyte, particularly in the case of LiPON, and the cathode, particularly where the cathode layer is a material such as LiCoO₂ that can act as a source of lithium ions. As used herein, LiPON refers generally to lithium phosphorus oxynitride materials. One example is Li₃PO₄N. Other examples incorporate higher ratios of nitrogen in order to increase lithium ion mobility across the electrolyte.

As noted above, the present invention provides in one aspect a method for producing a thin film lithium battery wherein the configuration of at least one of the layers containing lithiated compounds is patterned at least in part by a photolithography operation comprising removal of a photoresist material from the layer containing lithiated compounds by a process including a wet chemical treatment.

In preferred embodiments, the layer containing lithiated compounds is a cathode material or is an electrolyte. In an embodiment of the present invention, the thin film battery is initially constructed without an anode, but with a cathode layer that can act as a source of lithium ions. Upon charging of this thin film battery embodiment, metallic lithium is plated between the electrolyte the anode current collector to form an anode.

It will be understood that in one aspect of the invention, the battery is built in layers as a "bottom up" construction, whereby the substrate is provided with a cathode current collector, a cathode, a solid electrolyte, an anode (which is optional during the construction phase as discussed above), an anode current collector, and one or more encapsulant materials. Optionally, the cathode and anode may be provided in a side by side or other configuration. Alternatively, the battery may be constructed in an "upside down" order, where the layers are formed in reverse order from that discussed above. Alternatively, the layers may be formed separately and joined by a lamination process as will now be readily envisioned by the routineer in this art.

In a configuration of the present invention, the electrolyte overlays the cathode, preferably with an overlay distance of from about 5 to about 20 microns per edge. Configurations wherein the electrolyte underlays the cathode, preferably with an underlay distance of from about 5 to about 20 microns per edge, are specifically contemplated.

The photolithography operation of the present method preferably comprises
a) applying a photoresist material to the surface of at least one of the layers containing lithiated compounds,
b) processing the photoresist material to provide a pattern,
c) applying a developer to remove portions of the photoresist material, thereby defining masked and unmasked portions of the layer containing lithiated compounds,
d) removing unmasked portions of the layer containing lithiated compounds, and
e) removing the remaining photoresist material from the layer containing lithiated compounds by a wet chemical treatment.

The photoresist in one embodiment is a positive tone photoresist, and in another embodiment is a negative tone photoresist. Examples of such photoresists are well known in the art.

The wet chemical process to remove the remaining photoresist material from the layer containing lithiated compounds preferably is a non-aqueous process. Preferably, the wet chemical treatment comprises application of an organic solvent, such as N-Methylpyrrolidone. The wet chemical process may optionally be augmented by application of plasma chemistries, such as plasma O₂ chemistries.

In an aspect of the present invention, at least two of the process steps of applying the cathode current collector, the cathode material, the anode current collector, and the electrolyte layer are carried out in different processing apparatus. It has surprisingly been found that during the production of the thin layer lithium battery, satisfactory batteries are obtained even if at least one layer containing lithiated compounds is exposed to ordinary air conditions between process steps.

In an aspect of the present invention, it has been found that superior performance of the battery is obtained when the patterning of the layer containing lithiated compounds by a photolithography operation is carried out within about 72 hours of initial formation of the layer containing lithiated compounds. Preferably, the patterning of the layer containing lithiated compounds by a photolithography operation is carried out within about 48 hours, and more preferably within about 30 hours, of initial formation of the layer containing lithiated compounds.

In one aspect, the invention provides a method and apparatus for defining the boundaries of and separating individual battery cells from a larger sheet having a multilayered cathode-electrolyte anode structure manufactured on a large substrate of material (through the depositing of materials on the surface of the substrate in a substantially uniform blanket process).

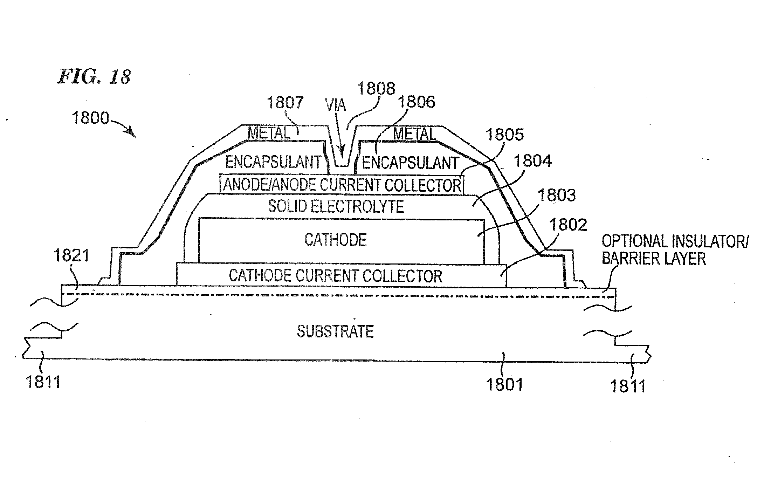

In some embodiments, the specification describes how the cells are defined, passivated, and removed from the material. In some embodiments, the invention uses laser ablation and/or dicing-saw techniques to remove the material for trenches used for defining single cells, coating the sides of the cells with passivation material (e.g., insulation and leveling material (material to level or flatten a surface, so later materials have better surface coverage) such as polymer, photoresist, LiPON, or other suitable materials, and/or metal layers used for electrical conductors and/or vapor and oxygen barriers). In other embodiments, (see the description of Figure 18, below) photolithographic techniques are used instead of laser ablation to mask and remove material, leaving the desired pattern of battery material, that is then coated with passivation and/or conductors. Further, techniques described for use with the laser ablation techniques are used in some embodiments of the photolithographic techniques, and vice versa.

Note that the schematic figures used herein are not to scale: the vertical thicknesses of the thin-film batteries described are extremely thin (e.g., less than about 10 microns, in some embodiments, and even less than 4 microns in other embodiments) as compared to the device lateral widths (e.g., 1000 microns (=1 mm) to 10,000 microns (=10 mm) in some embodiments, and up to several centimeters in other embodiments). Further, the trenches in some embodiments of the present invention are about 10 microns or less wide. In particular, photolithographic techniques allow trench widths and other dimensions to be very small and/or very accurate, as compared to shadow mask techniques.

In some embodiments, the battery cell devices of the present invention use materials, processes, techniques of the various patents and patent applications (e.g., U.S. Provisional Patent Application 60/700,425, U.S. Patent Application 10/895,445, U.S. Patent Application 11/031,217 (entitled "LAYERED BARRIER STRUCTURE HAVING ONE OR MORE DEFINABLE LAYERS AND METHOD" filed January 6, 2005 by D. Tamowski et al.), U.S. Patent Application 11/458,091 (entitled "THIN-FILM BATTERIES WITH SOFT AND HARD ELECTROLYTE LAYERS AND METHOD" filed July 17,2006 by J. Klaassen), and U.S. Patent 6,805,998) that are incorporated herein by reference, and in general those are not further discussed here.

### LASER-ABLATION AND/OR DICING-SAW TECHNIQUES

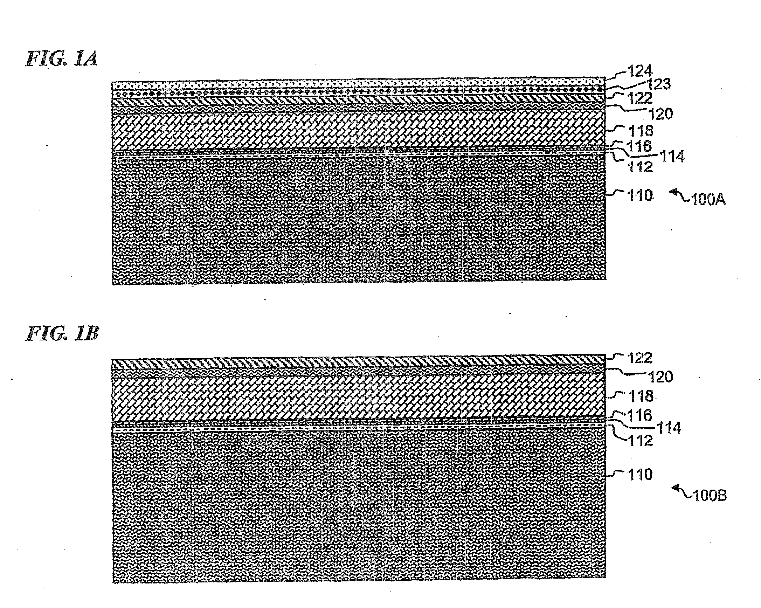

Figure 1A is a schematic cross-section view of a partially manufactured layered structure 100A (also called a "blanket") for making a plurality of solid-state cells (e.g., battery cells for storing electrical power) of some embodiments of the invention. In some embodiments, structure 100A begins with a substrate 110, which, in various embodiments, is a metal foil, or a silicon or sapphire wafer, or a plastic film such as, for example, Kapton™ (solid-state battery cells are fabricated on a carrier material referred to as substrate 110). The substrate can include a choice of one or more materials including, for example, silicon, ceramic, metal foils (both ferrous, non-ferrous, and alloys), flexible polymers Kapton™, polyethylene, polypropylene, polycarbonate, etc.) and composites that include such polymers, rigid polymers and composites (i.e., printed-circuit-board (PCB) material). In some embodiments, the substrate is provided in a selected sheet size or, in other embodiments, as a continuous roll of material. In some embodiments, an optional insulating layer 112 (such as, for example, silicon nitride or oxidized silicon (SiO₂)) is deposited on substrate 110, depending on the substrate used and whether electrical conduction is desired through the bottom or sides of the substrate 110.

In some embodiments, a multilayered vapor barrier (which also acts as an insulating layer) is used for layer 112, such as described in U.S. Patent Application 11/031,217 entitled "LAYERED BARRIER STRUCTURE HAVING ONE OR MORE DEFINABLE LAYERS AND METHOD" filed January 6, 2005 by David Tarnowski et al., which is incorporated herein in its entirety by reference.

In some embodiments, an adhesion layer 114 (e.g., a metal such as chrome or titanium or other suitable adhesive material) is then deposited, and a cathode contact layer 116 (e.g., a metal such as copper, nickel or aluminum or suitable conductive materials, e.g., chosen so that it does not migrate into the cathode) is then deposited. Cathode material 118 (such as lithium cobalt oxide, LiCoO₂) is then deposited, and is covered with one or more electrolyte layers 120 (such as LiPON and/or a lithium-conducting polymer electrolyte or other suitable electrolyte, for example, a multilayered electrolyte such as described in U.S. Patent Application 11/458,091 entitled "THIN-FILM BATTERIES WITH SOFT AND HARD ELECTROLYTE LAYERS AND METHOD." In some embodiments, an anode and/or anode contact material (such as, for example, copper, nickel or aluminum and/or lithium covered by copper, nickel or aluminum) is deposited (in some embodiments, the anode-contact material (e.g., copper or nickel) is deposited on LiPON electrolyte, and the lithium is later plated (e.g., by the first charging of the battery)). In some embodiments, the cell is charged later by plating lithium through the electrolyte 120 and onto anode contact material 122. In some embodiments, one or more protective or passivation layers 123 and/or 124 (or still further pairs of alternating layers, e.g., of an insulating smoothing layer such as photoresist (e.g., Shipley 220 photoresist; various polyimides from HD Microsystems, such as the 2720 series, which includes 2727, 2723, 2729; the 2770 series which includes 2770 and 2772; the 2730 which includes 2731 and 2737; the PIX Series which includes PIX-1400, PIX-3476, PIX-S200, PIX-6400; the 2500 series, which includes 2525, 2555, 2575 and 2556; and various other polymeric materials such as Cyclotene product numbers 3022-35, 3022-46, 3022-57 and 3022-63 from Dow Chemical Company; photodefinable silicones such as WL-5351 and WL-3010 from Dow Chemical Company; and UV curable epoxy such as 9001 from Dymax Corporation, or the like) and a metal layer such as aluminum or copper or the like). Each layer is deposited with the appropriate material at the required thickness to allow for the desired Cells energy density. In some cases, the substrate (e.g., if made of a conductor such as a metal foil (e.g., copper foil) can serve as an electrical contact of the cell. In some embodiments, the positive portion (i.e., substrate 110, insulator 112, adhesion layer 116, cathode contact 116, cathode material 118, and one LiPON layer (a portion of electrolyte 120)) is formed as a first sub-sheet, while anode contact layer 112 covered on its lower (relative to the Figure) surface by a LiPON layer (another portion of electrolyte 120) as a second sub-sheet, and then the first and second sub-sheets are laminated together using a soft electrolyte layer (yet another portion of electrolyte 120) therebetween. In some embodiments, the soft electrolyte layer includes polyphosphazene and a lithium salt, or any suitable polymer layer (solid, gel, or liquid/sponge) such as described in U.S. Patent Application 11/458,091 entitled "THIN-FILM BATTERIES WITH SOFT AND HARD ELECTROLYTE LAYERS AND METHOD."

In some embodiments, substrate 110 is about 500 microns (or thinner) to about 1000 microns (or thicker) thick (e.g., 525 or 625 microns of silicon wafer, in some embodiments). In other embodiments, substrate 110 includes a polymer layer (e.g., Kapton) that can be as thin as 25 microns or thinner. In some embodiments, layer 112 is about one micron of silicon nitride, layer 114 is about 0.5 microns of titanium, layer 116 is about 0.5 microns of nickel, layer 118 is about 5 to 10 microns of lithium cobalt oxide, electrolyte layer 120 is about I to 2.5 microns of LiPON, and layer 122 is about 3 microns of copper. In some embodiments, additional layers are added on top (e.g., 10 microns of a polymer such as Shipley 220 photoresist, then 7 microns of a metal such as copper or aluminum, then 10 more microns of a polymer such as Shipley 220 photoresist, then 3 to 7 more microns of a metal such as copper or aluminum).

Figure 1B is a schematic cross-section view of a layered structure 100B for making a solid-state cell of some embodiments of the invention. In some embodiments, layered structure 100B has similar reference-numbered layers as described above for Figure 1A. Note: The singulation process described here can be utilized for single- or multi-layer passivation processes. The ablation process (defined herein as removal of material by laser or other radiation ablation (called herein "laser ablation") and/or (sawing or scribing of a kerf) and/or photoresist-defined etching or dissolving) can be utilized to open contact areas to underlying features (metal contacts) in multiple configurations (even in different configurations on the same sheet) to provide different cell sizes or electrical contact configurations, and/or expose side walls that can be covered by one or more protective layers. Subsequent layers of the battery cell device and/or other devices may then be deposited (either as a blanket deposition (that can be patterned using photoresist techniques) or defined by shadow masks), and other patterns laser-ablated or otherwise selectively removed, in a manner similar to semiconductor processing. In some embodiments, the laser ablation is accomplished to the desired depth less than completely through (or, in other embodiments, completely through the material) using a series of shallower ablation-removal steps (e.g., multiple laser ablation paths left-to-right and top to bottom across the blanket are ablated multiple times, each time removing a shallow amount of additional material) in order to avoid overheating or melting of surrounding areas. In some embodiments, the laser ablation paths are followed in an interleaved pattern (e.g., on a first pass, ablate to a first depth the first one of every three adjacent vertical lines and the first one of every three adjacent horizontal vertical lines, on a second pass, ablate to the first depth the second one of every three adjacent vertical lines and the second one of every three adjacent horizontal vertical lines, and on a third pass, ablate to the first depth the first one of every third adjacent vertical lines and the first one of every third adjacent horizontal vertical lines, then repeat to ablate each line to a second (deeper) depth, and optionally ablate to even deeper depths on subsequent rounds).

In some embodiments, the completed blanket or sheet or a portion of a rolled section of cell material 100A or 100B is located on a positioning table for ablation and/or cutting. In various embodiments, a laser, or a dry- or wet-wafer-dicing saw is programmed to singulate the appropriate size cell from the blanket of material for the ablation process. The area removed between the cells is called the kerf (e.g., channel 211 or 212 described below).

In some embodiments, a cut is made part-way-through cell material 100A or 100B to separate individual cells from one another, while leaving a portion of the substrate uncut. In some embodiments, the substrate is cut and separated into a plurality of pieces, each piece having one or more cells. Then one or more passivation layers are added to seal the now-exposed sides of the cells. In some embodiments, the cells are later singulated (completely separated) from one another.

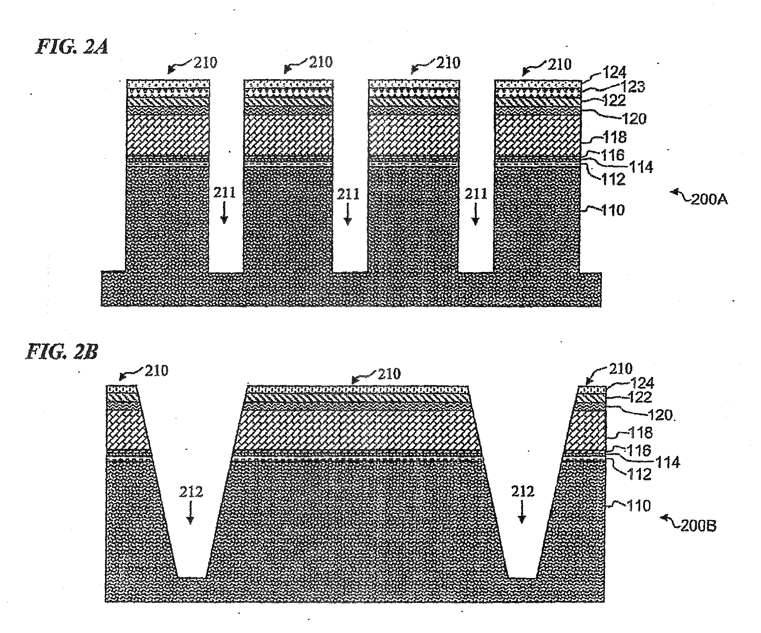

Figure 2A is a schematic cross-section view of an ablated layered structure 200A for making a solid-state cell of some embodiments of the invention. In some embodiments, a series of kerfs or channels are cut (e.g., using either a single cut, or by repeated shallower cuts), e.g., by laser ablation of the material. In some embodiments, vertical-walled channels 211 are cut, such as shown in Figure 2A, leaving a plurality of islands 210 of battery layers. In other embodiments, sloping-walled channels 212 are cut, such as shown in Figure 2B. In some embodiments, each island is rectangular in shape, as viewed from above. In other embodiments, the islands are other selected shapes as desired. In some embodiments, a large plurality of islands are formed in both dimensions across the face of the sheet 100A.

Figure 2B is a schematic cross-section view of an ablated layered structure 200B for making a solid-state cell of some embodiments of the invention. In some embodiments, sloping walled channels 212 are cut, in order that subsequent deposited layers more fully cover the side walls. In some embodiments, a large plurality of islands are formed in both dimensions across the face of the sheet 100B.

In some embodiments, the ablation process includes removing the deposited material through the vaporization or cutting of material at a precisely controlled rate. The laser or dicing saw is controlled in the z-axis (vertical in Figure 2A and Figure 2B) for proper depth control, the kerf width is set to allow additional material to be deposited. The controlled rate of ablation (i.e., using a plurality of shallow cuts) ensures the deposited layers are not heat-affected to the point of causing melting, smearing or material cross-over. In some embodiments, the material is ablated or cut through towards the substrate at a depth approximately 1-5 microns below the initial layer of active material (Figure 2). The remaining substrate serves as a mechanical support for the cells prior to total separation from the substrate.

The substrate of defined cells is then moved into area for passivation application. Passivation can, in some embodiments, include: a singular polymer layer, a stack of polymer and metal layers, or a stack of solid state insulating material and metal layers.

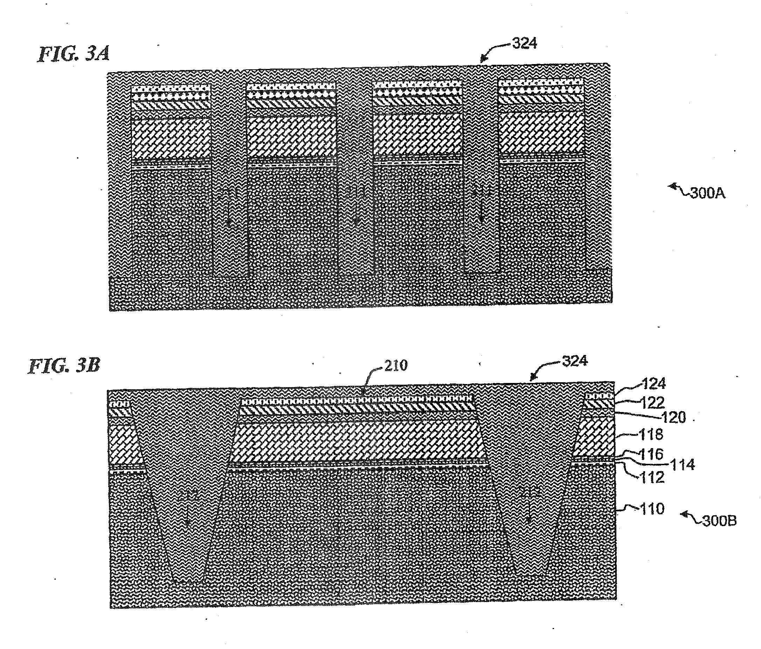

Figure 3A is a schematic cross-section view of an ablated and filled solid-state-cell inprocess 300A of some embodiments of the invention. In some embodiments, the process uses a single polymer protective coat, where a film of polymer material is applied over the substrate, filling the kerf 211 or 212 in the ablated areas and covering the top of the cells (Figure 3A or Figure 3B). In some embodiments, the polymer material 324 is applied via mist spray, vapor prime, or dispensed and leveled with a doctor blade, depending on the viscosity of the material. In some embodiments, the passivation material is cured to the appropriate level of solidity.

Figure 3B is a schematic cross-section view of an ablated and filled solid-state-cell in-process 300B for making a solid-state of some embodiments of the invention. In some embodiments, the polymer material 324 fills the channels and covers the tops of islands 210.

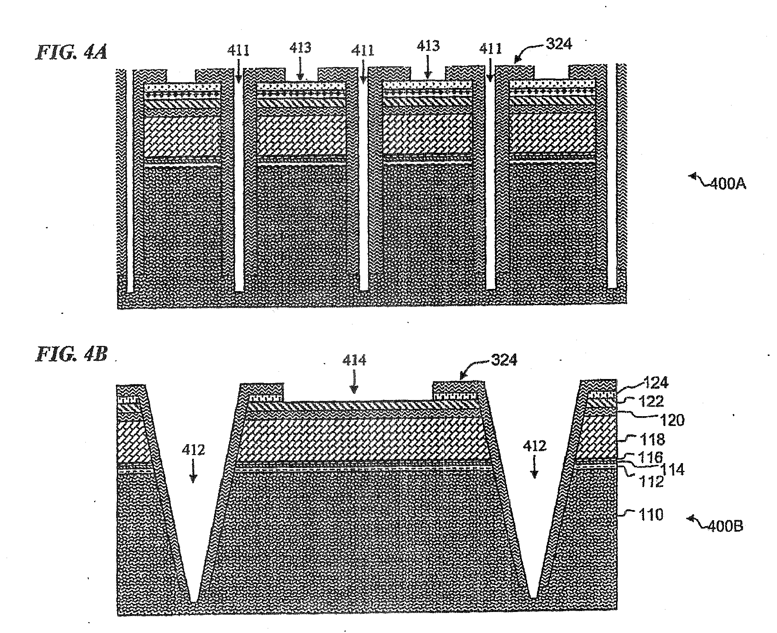

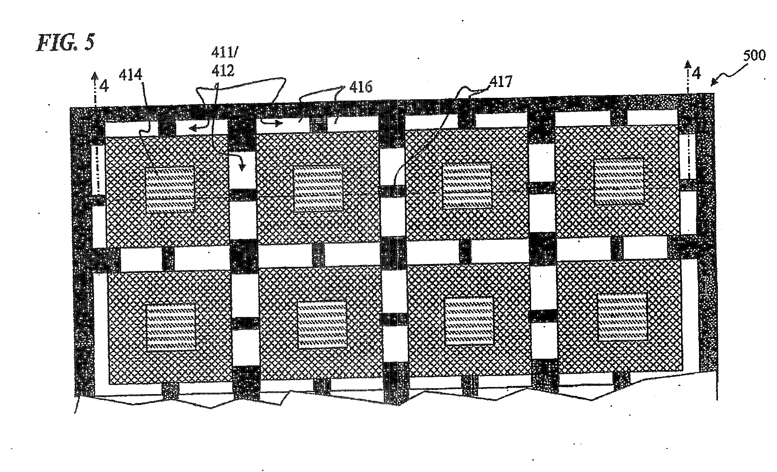

Figure 4A is a schematic cross-section view of a re-ablated solid-state cells 400A of some embodiments of the invention. In some embodiments, the substrate is moved back into the laser-ablation system (or saw machine or etching/dissolving station) for contact definition and cell separation. The laser beam or dicing saw ablates (cuts) vertical-walled channels 411 through the passivation material 324, and openings 413 to the contact (e.g., anode contact layer 122) on the top of each cell (Figure 4A) or sloping-walled channels 412 through the passivation material 324, and openings 414 to the contact on the top of each cell (Figure 4B). Following the contact definition, the laser or dicing saw is set at a percentage of the original ablation kerf width. The beam ablates through the passivation material and through the substrate with the exception of small support tabs in the corners and center of each cell side (Figures 4A, 4B, and 5).

Figure 4B is a schematic cross-section view of a re-ablated solid-state cell 400B of some embodiments of the invention. In these embodiments, the sidewalls of the cells are sloping, in order to provide better sealing of the passivation layer 324. (See the descriptions above for Figures 1B, 2B, and 3B). Figure 5 is a schematic top-down view of reablated solid-state cells 500 of some embodiments of the invention. In some embodiments, cells 500 represent the top view of reablated solid-state cells 400A of Figure 4A, while in other embodiments, cells 500 represent the top view of re-ablated solid-state cells 400B of Figure 4B. This view shows that portions (i.e., through-slots 416) of the channels 411 (for the embodiments of Figure 4A) or 412 (for the embodiments of Figure 4B) are cut all the way through, while other portions are left as tabs 417 to keep the singulated batteries connected for the time being, to facilitate handling. That is, the cells remain connected to the waste outer substrate though post-ablation operations. Final separation of the cells is accomplished by upward or downward force on individual cells by a pick-and-place system.

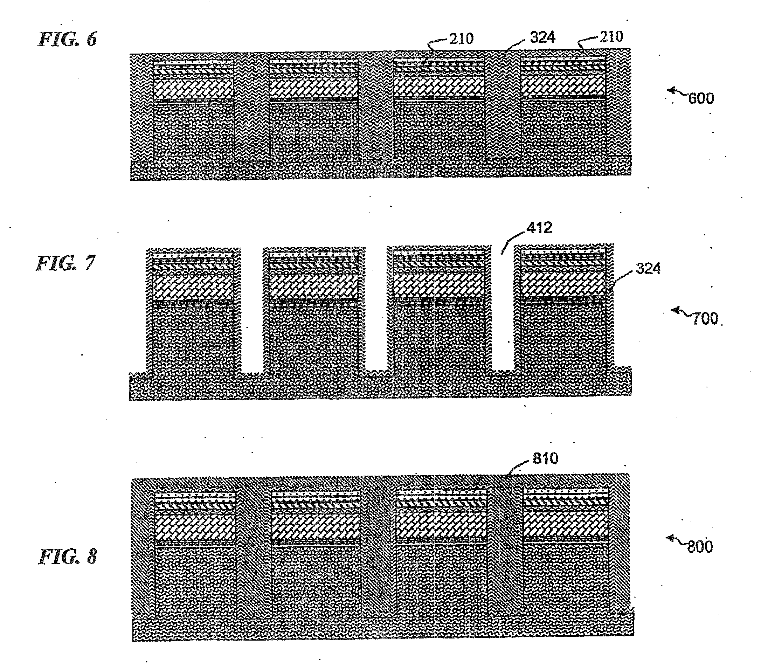

Figure 6 is a schematic cross-section view of a partially manufactured layered structure 600 (in some embodiments, similar to Figure 2A or 2B) for making a solid-state cell of some embodiments of the invention. Following the initial cell definition as described in section 1, a film of polymer material is applied over the substrate, filling in the ablated areas and covering the top of the cells (Figure 6). The polymer material is applied via mist spray, vapor prime, or dispensed and leveled with a doctor blade, depending on the viscosity of the material. The passivation material is cured to the appropriate level of solidity. In the use of insulating solid state film, the material is applied though magnetron sputtering or vacuum evaporation deposition (Figure 6).

Figure 7 is a schematic cross-section view of an ablated layered structure 700 (in some embodiments, similar to Figure 3A or 3B) for making a solid-state cell of some embodiments of the invention. The substrate is moved back into the laser ablation system or dicing saw for removal of excess polymer or insulating material. The laser beam or dicing saw ablates the through the passivation material, leaving a layer that completely covers the cell (Fig 7).

Figure 8 is a schematic cross-section view of an ablated and filled solid-state-cell-inprocess 800 of some embodiments of the invention. In some embodiments, a layer of metal 810 is deposited. The substrate is placed in a vacuum chamber for metal deposition. In some embodiments, this is accomplished through magnetron sputtering or vacuum evaporation (Figure 8).

The substrate is moved back into the laser ablation system or dicing saw for contact definition and cell separation. The laser beam or dicing saw ablates the through the layers of passivation material to the contact on the top of each cell (Figure 9). Following the contact definition, the laser is set at a percentage of the original ablation kerf width. The beam ablates through the passivation material and through the substrate with the exception of small support tabs in the corners and center of each cell side (Figure 10).

Figure 9 is a schematic cross-section view of a solid-state-cell-in-process 900 of some embodiments of the invention. In some embodiments, fill material 810 is ablated in channels 812, leaving a thin layer of material 810. In some embodiments, the substrate is moved back into the laser ablation system or dicing saw for contact definition and cell separation. In some embodiments, the laser beam or dicing saw ablates through the layers of passivation material to the contact on the top of each cell (Figure 9). Following the contact definition, the laser is set at a percentage (less than 100 percent) of the original ablation kerf width. The beam ablates through the passivation material and through the substrate with the exception of small support tabs 1017 in the corners, and an opening center of each cell side (Figure 10).

Figure 10 is a schematic cross-section view of a solid-state-cell-in-process 1000 of some embodiments of the invention. In some embodiments, the cells remain in the substrate though post ablation operations. Final separation of the cells is accomplished by upward or downward force on individual cells through a pick and place system.

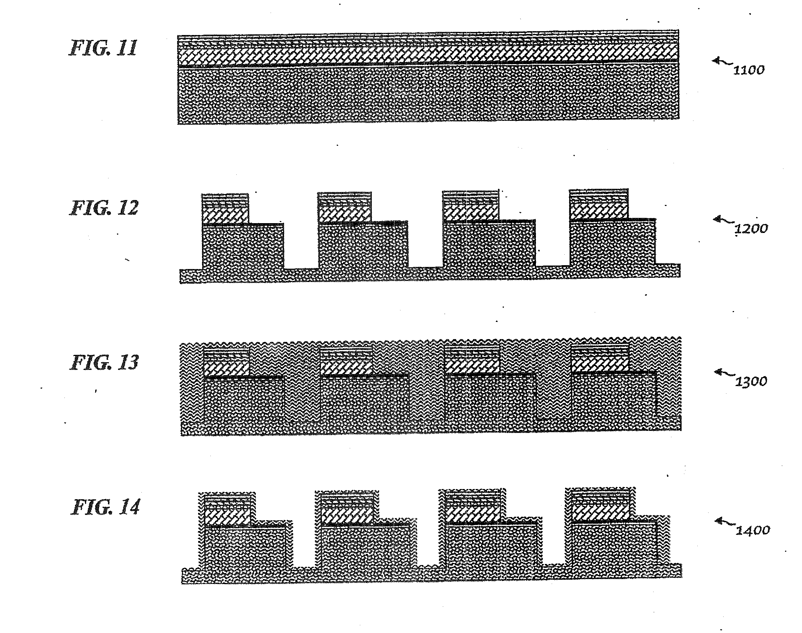

Figure 11 is a schematic cross-section view of a solid-state-cell-in-process 1100 of some embodiments of the invention after a blanket cell process. In cells where both contacts are accessed through the top of the cell; the process is similar to those described above with the exception of the ablation definition.

Figure 12 is a schematic cross-section view of a solid-state-cell-in-process 1200 showing cell and top side contacts defined through ablation.

Figure 13 is a schematic cross-section view of a solid-state-cell-in-process 1300 showing a first layer of passivation applied.

Figure 14 is a schematic cross-section view of a solid-state-cell-in-process 1400 showing a first layer of passivation material is ablated to uniformly cover the cell.

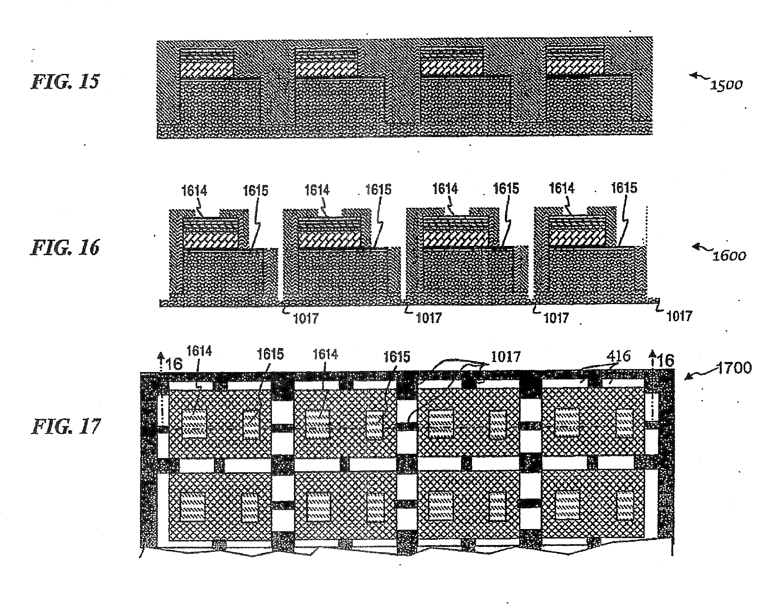

Figure 15 is a schematic cross-section view of a solid-state-cell-in-process 1500 showing additional layer(s) of passivation material is applied (metal).

Figure 16 is a schematic cross-section view of a solid-state-cell-in-process 1600 showing contact areas of the cell are ablated and the cells are ablated with the exception of substrate support tabs.

Figure 17 is a schematic top view of a solid-state-cell-in-process 1700 showing a top view of cells with contact pads identified and support tabs identified.

### PHOTOLITHOGRAPHIC TECHNIQUES

Batteries used to provide back-up power in microelectronic applications come in various sizes, but are typically coin cells that are mounted to circuit boards using metallic tabs that are soldered to traces on the circuit board. The minimum size of these batteries is limited to several millimeters in diameter, and 1-2 mm in thickness, primarily due to the constraint of requiring a metal canister and a gasket, to protect the batteries from the environment. This limitation precludes the direct integration of the battery within the package that also contains the integrated circuit for which the battery will provide power.

Thin film solid state batteries can be made on various substrates, of various thicknesses. Heretofore, solid state thin film batteries have been fabricated using shadow-masked techniques, whereby each of the films used in the construction of the battery is deposited through an opening in a mask. This approach limits the minimum practical size of the battery to perhaps 10 millimeters on a side, due to considerations such as layer-to-layer overlap, mask tolerances, blow under of the deposited film beneath the perimeter of the mask opening, etc. That approach is prone to particulate generation due to the physical application of a mask onto the substrate and films already resident on the substrate at any given masking operation. These particulates are potential failure sites since they become embedded into the battery structure and are likely to cause unpredictable behavior when the battery is charged or discharged. The present invention discloses a technique whereby the various films are deposited, then patterned and removed in the unwanted regions. This technique permits the footprint of the battery to range from about 1 millimeter on a side, to tens of centimeters on a side. Moreover, using this technique, batteries can be built on substrates similar to those used for integrated circuit manufacture, thus making the final assembly and integration processes more straightforward and cost efficient.

Several renditions are possible, with respect to layer to layer overlap/underlap, and several methods for selectively removing material in particular regions are also possible. Both wet and dry etching are possible for many of the films in the battery structure, and several photosensitive materials may.be used for patterning any given layer. Some of the materials in the battery structure are water soluble; therefore, non-aqueous photoresist developers and post etch photoresist strippers preferably are used in order to avoid removing material in the regions where that material is to remain. Both negative tone and positive tone photoresists are possible, depending on the compatibility with the material to be patterned and/or design features to be provided.

In order to fabricate the microbattery, several layers of material must be deposited and photo-shaped, either in the order they are deposited, or in reverse order, or some combination of the two. Overlay distance of one layer relative to the adjacent is dependent on a number of factors, including mask aligner tolerance, etch size change, mask bias, and any factors relating to battery performance, including the plating of lithium, hermetic encapsulation, etc.

Figure 18 is a schematic cross-section view of a solid-state-cell 1800 showing contact areas and/or layers of the cell that are photo-lithographically defined. Optionally, photo-lithographic techniques are also used to singulate the cell with the exception of optional substrate support tabs. In some embodiments, cell 1800 is formed by successive layers deposited on substrate 1801. In other embodiments, some of the successive layers are deposited on substrate 1801, while other layers are deposited on a top-side layer that is then laminated to the substrate and its layers, as described in U.S. Patent Application 11/458,091 cited above. In some embodiments, substrate 1801 is covered by cathode current collector layer 1802, cathode material 1803, electrolyte layer 1804 (e.g., LiPON, or a plurality of electrolyte layers as described in U.S. Patent Application 11/458,091 cited above), anode current collector layer 1805 in the case where the battery is charged after assembly (or an anode material followed by anode current collector layer 1805 in the case where the anode material is deposited first), encapsulant 1807, and metal layer 1807 (which contacts anode current collector layer 1805 through a hole or via through encapsulant 1807).

Some embodiments use, for substrate layer 1801, silicon, alumina, copper, stainless steel or aluminum. In some embodiments, substrate thickness ranges from 0.001" for the metal foils, to approximately 0.030" for silicon and alumina.

The battery size can range from about 1 mm square or smaller to as large as 2 square centimeters or larger. Batteries in this size range give practical amounts of discharge capacity and are also economically practical for manufacturing. Batteries can be square, rectangular, circular, or of myriad other shapes as required by the application.

In some embodiments, the construction of the battery begins with the deposition of the cathode current collector 1801, except in the case of the metal foil, where the substrate can serve as the current collector. In some such embodiments, the substrate is covered by an insulating layer (e.g., SiO₂ which insulates the cathode-contact substrate from the top metal layer 1807), which is then patterned to leave a hole in the insulator for the cathode contact. The current collector 1801, in some embodiments, includes a Ti/Ni stack, with the Ti deposited directly on the substrate to promote adhesion, with the Ni in contact with the cathode 1803, as the cathode (e.g., LiCoO₂) adheres well to it. Another approach uses Al/Ni, the Al serving as a stress-relieving layer to prevent or reduce nucleation sites and prevent cracks from occurring in the cathode, particularly as the cathode thickness is increased to several microns. In some embodiments, the current collector film thickness is about 0.05 to 0.2 microns for the Ti, and about 0.1 to 0.5 microns for the Ni. Where Al is used, the film thickness ranges from about 0.5 to 9 microns. After using photoresist to pattern the current collector, and wet or dry etch chemistries to the current collector, the resist is removed using solvents and plasma O₂ chemistries and the next layer is deposited - in this case, the cathode.

In some embodiments, the cathode 1803 thickness ranges from about 3 to 15 microns, depending on the charge/discharge capacity requirements for a given application. This material is typically LiCoO₂. Cathodes less than about 3 microns thick have also been produced, but the discharge capacity for a micro-battery is usually too low to satisfy the application requirements. There are cases whereby a thin cathode is sufficient, and the manufacturing techniques and battery geometries apply to these thin cathode devices as well. In some embodiments, the cathode is then patterned using a positive tone photoresist such as SPR 220 and etched using a wet chemistry. The overlay of the cathode relative to the underlying cathode current collector is about 5 to 20 microns per edge (undersized). The photomask is sized to account for worst case misalignment between the two layers, and also for size changes due to the etch and overetch of the two films. The photoresist is removed using solvents such as N-Methylpyrrolidone (NMP), optionally coupled with plasma O₂ chemistries. The sidewall profile of the cathode is important, as it determines how well the subsequent layers (e.g., LiPON, anode metal, etc.) will cover that sidewall. A steep or re-entrant sidewall results in poor step coverage and in some cases, discontinuous film coverage. This has implications for subsequent processing complexity, hermeticity, and reliability; thus a sloped sidewall is desirable. Shadow-masked depositions naturally result in a long, tapered profile, extending as much as 100 microns or more as measured from the point where the film is full thickness, to the point where it tapers to nothing. In photo-patterned and wet etched LiCoO₂, the sidewall can be made to be vertical, sloped negatively, or sloped positively - the latter case being the preferred slope. A slope of 20 to 70 degrees off of normal is suitable for preventing the undesirable side effects of a vertical or re-entrant sidewall, while not sacrificing too much device area to the tapered region of the film. This range of angles can be achieved using the appropriate combination of photoresist material, exposure, develop time, LiCoO₂ etch chemistry, and etch parameters (e.g., temperature, agitation, etc.).

Once the cathode has been patterned, it is annealed and the solid electrolyte, LiPON 1804_{,} is then deposited, photo-patterned using a negative tone photoresist such as various polyimides from HD Microsystems, such as the 2720 series, which includes 2727, 2723, 2729; the 2770 series which includes 2770 and 2772; the 2730 series which includes 2731 and 2737; and photodefinable silicones such as WL-5351 and WL-3010 from Dow Chemical Company. Since the LiPON is water soluble, most commercially available positive tone resists are not suitable for patterning LiPON because of the water-based developers used with these photoresists. The electrolyte thickness is typically about 0.5 to 2.5 microns thick. Alternately, the LiPON can be deposited prior to patterning the cathode, followed with the patterning of the cathode as stated above. In the first case, the LiPON extent can be either undersized or oversized relative to the underlying cathode; in the latter case, the LiPON must be undersized relative to the cathode in order for the cathode photomask pattern to extend beyond the LiPON. The LiPON border can extend beyond the cathode current collector edge, or be terminated short of the current collector border. By confining the LiPON to within the current collector border, contact to the cathode can be made by leaving that current collector, or a portion of it, exposed for later access for wirebonding, soldering, conductive epoxy, etc. When a top and bottom surface contacting scheme is to be used, the cathode current collector is accessed through the conductive substrate instead. Overlay/underlay distances are about 5 to 20 microns per edge. The photoresist is removed using non-aqueous solvents and optionally plasma O₂ chemistries.

The anode and/or anode current collector 1805 is then deposited, at a thickness of about 0.5 to 3 microns. Either Cu or Ti or Ni can be used here as the anode current collector Li-plating anodes. Aluminum can also be used, though it will serve as an alloying, rather than a plating, anode, and device performance, charging voltage, etc. will differ. In some embodiments, the anode must reside either fully atop the LiPON in the case where the LiPON is undersized relative to the cathode (else the battery will be electrically shorted), or, in the case where LiPON is oversized relative to the cathode, the anode, can be undersized or oversized relative to the cathode and the LiPON. In the case where the substrate is conductive, or where the cathode current collector extends beyond the LiPON perimeter, the anode must not extend beyond the LiPON perimeter, else the device will be shorted as well. In some embodiments, the anode is patterned using either negative tone or positive tone photoresist, depending on whether the underlying LiPON will be exposed to the photoresist developer or other aqueous solutions during the formation of the anode. Again, typical overlap/underlap distances range from about 5 to 20 microns per edge. In some embodiments, the anode is etched with reactive ion etching (RIE) in the case of Ti and Al, and with wet chemistries in the case of Cu and Ni. In some embodiments, wet chemistries can also be used for etching Ti and Al, but dry etching is preferred for the sake of cleanliness and etch control, and to prevent wet chemistries from inadvertently etching the LiPON in the case of using aqueous etch solutions. In some embodiments, the anode is also shaped prior to shaping any of the underlying materials. In some embodiments, the photoresist is removed using a combination of solvents and plasma O₂ chemistries. In the case of a pyramidal stack that has one or more successively deposited layer subsequently undersized relative to the film directly beneath it, the layers having such a configuration in the battery stack could be deposited sequentially, then patterned beginning with the uppermost undersized layer in the stack.

In some embodiments, the next step is to encapsulate - or passivate - the device and, in one rendition, bring the anode/anode current collector to the perimeter of the battery for access in order to wirebond, solder, connect with conductive epoxy, etc. The encapsulation is desirable in order to protect the battery materials from exposure to water vapor, oxygen, and other environmental contaminants. Lithium reacts readily with other elements and compounds, and therefore should be isolated from the outside world after production of the battery. In some embodiments, this is accomplished through the use of a multilayer, alternating stack of spin-on material - usually an organic material is used for each layer 1806 such as a silicone, polyimide, epoxy or other such polymer as discussed above - for the purpose of smoothing out defects and nonplanar surfaces, and then a metallization layer 1807, such as Al or Cu, is deposited, in an alternating fashion, for the purpose of preventing the migration of external contaminants into the active battery structure. In an embodiment of the present invention, an alternating encapsulating structure comprising one or more layers of nitride and one or more metal layers is contemplated. In some embodiments, each successive layer of this multilayer stack extends beyond the border of the preceding layer by about 15 to 30 microns. This provides a seal ring. The organic layer thickness is about 8 to 10 microns and includes a via for allowing the overlying metal layer to be electrically connected to the anode/anode current collector. The metallization is typically about 1 to 3 microns thick for each deposited layer. The final layer is usually silicon nitride, at a thickness of about 0.5 to 1 microns, which provides additional hermetic protection and is compatible with integrated circuit packaging materials. It also serves as something of a physical barrier to abrasion and handling damage. In the case where the substrate is used to make contact to the cathode current collector, the cathode current collector can be completely sealed, thus providing a better hermetic seal compared with the case in which a cathode current collector tab must remain exposed during the passivation process for later access for electrical connection. An alternate approach to the multilayer stack of organic/metal/organic/metal is to using a single smoothing layer of organic material, then electroplate a thick layer of copper or nickel or gold in order to provide the moisture and oxygen barrier and electrical contact to the anode.

In some embodiments, for some of the layers in the battery stack, it is also desirable to chamfer the corners, rather than having right angles. In some embodiments, this is accomplished by forming a corner in the photomask using two or more line segments. The photo and etch processes will naturally round the corner more gradually than as drawn on the photomask. In some embodiments, the benefit is in stress relief primarily, to reduce the likelihood of stress fracturing of the films. A secondary benefit is that the photoresist coverage over the tall sidewalls, particularly as the cathodes are made thicker, will be increased relative to a structure having a right angle.

One aspect of some embodiments of the invention includes an apparatus that includes a substrate having an anode contact, a LiPON electrolyte separator deposited on the anode contact, and a plated layer of lithium anode material between the LiPON and the anode contact.

In some embodiments, the anode contact includes copper and the substrate includes a polymer.

Another aspect of the invention includes an apparatus including a deposition station that deposits LiPON onto an anode contact, an optional plating station that plates lithium onto the anode contact to form an anode substrate, a cathode-deposition station that deposits a cathode material onto a substrate and deposits LiPON onto the cathode material to form a cathode substrate, and an assembly station that assembles the anode substrate to the cathode substrate using a polymer electrolyte material sandwiched between the cathode substrate and the anode substrate.

In some embodiments of the invention, the deposition station comprises sputter deposition of LiPON.

In some embodiments, the LiPON is deposited onto the anode contact with a thickness of between about 0.1 microns and about I micron. In some embodiments, the anode's LiPON layer is less than 0.1 microns thick. In some embodiments, this LiPON layer is about 0.1 microns. In some embodiments, this LiPON layer is about 0.2 microns. In some embodiments, this LiPON layer is about 0.3 microns. In some embodiments, this LiPON layer is about 0.4 microns. In some embodiments, this LiPON layer is about 0.5 microns. In some embodiments, this LiPON layer is about 0.6 microns. In some embodiments, this LiPON layer is about 0.7 microns. In some embodiments, this LiPON layer is about 0.8 microns. In some embodiments, this LiPON layer is about 0.9 microns. In some embodiments, this LiPON layer is about 1.0 microns. In some embodiments, this LiPON layer is about 1.1 microns. In some embodiments, this LiPON layer is about 1.2 microns. In some embodiments, this LiPON layer is about 1.3 microns. In some embodiments, this LiPON layer is about 1.4 microns. In some embodiments, this LiPON layer is about 1.5 microns. In some embodiments, this LiPON layer is about 1.6 microns. In some embodiments, this LiPON layer is about 1.7 microns. In some embodiments, this LiPON layer is about 1.8 microns. In some embodiments, this LiPON layer is about 1.9 microns. In some embodiments, this LiPON layer is about 2.0 microns. In some embodiments, this LiPON layer is about 2.1 microns. In some embodiments, this LiPON layer is about 2.2 microns. In some embodiments, this LiPON layer is about 2.3 microns. In some embodiments, this LiPON layer is about 2.4 microns. In some embodiments, this LiPON layer is about 2.5 microns. In some embodiments, this LiPON layer is about 2.6 microns. In some embodiments, this LiPON layer is about 2.7 microns. In some embodiments, this LiPON layer is about 2.8 microns. In some embodiments, this LiPON layer is about 2.9 microns. In some embodiments, this LiPON layer is about 3 microns. In embodiments, this LiPON layer is about 3.5 microns. In some embodiments, this LiPON layer is about 4 microns. In some embodiments, this LiPON layer is about 4.5 microns. In some embodiments, this LiPON layer is about 5 microns. In some embodiments, this LiPON layer is about 5.5 microns. In some embodiments, this LiPON layer is about 6 microns. In some embodiments, this LiPON layer is about 7 microns. In some embodiments, this LiPON layer is about 8 microns. In some embodiments, this LiPON layer is about 7 microns. In some embodiments, this LiPON layer is about 9 microns. In some embodiments, this LiPON layer is about 10 microns. In some embodiments, this LiPON layer is more than 10 microns.

In some embodiments, the LiPON is deposited onto the cathode contact with a thickness of between about 0.1 microns and about 1 micron. In some embodiments, the cathode's LiPON layer is less than 0.1 microns thick. In some embodiments, this LiPON layer is about 0.1 microns. In some embodiments, this LiPON layer is about 0.2 microns. In some embodiments, this LiPON layer is about 0.3 microns. In some embodiments, this LiPON layer is about 0.4 microns. In some embodiments, this LiPON layer is about 0.5 microns. In some embodiments, this LiPON layer is about 0.6 microns. In some embodiments, this LiPON layer is about 0.7 microns. In some embodiments, this LiPON layer is about 0.8 microns. In some embodiments, this LiPON layer is about 0.9 microns. In some embodiments, this LiPON layer is about 1.0 microns. In some embodiments, this LiPON layer is about 1.1 microns. In some embodiments, this LiPON layer is about 1.2 microns. In some embodiments, this LiPON layer is about 1.3 microns. In some embodiments, this LiPON layer is about 1.4 microns. In some embodiments, this LiPON layer is about 1.5 microns. In some embodiments, this LiPON layer is about 1.6 microns. In some embodiments, this LiPON layer is about 1.7 microns. In some embodiments, this LiPON layer is about 1.8 microns. In some embodiments, this LiPON layer is about 1.9 microns. In some embodiments, this LiPON layer is about 2.0 microns. In some embodiments, this LiPON layer is about 2.1 microns. In some embodiments, this LiPON layer is about 2.2 microns. In some embodiments, this LiPON layer is about 2.3 microns. In some embodiments, this LiPON layer is about 2.4 microns. In some embodiments, this LiPON layer is about 2.5 microns_{.} In some embodiments, this LiPON layer is about 2.6 microns. In some embodiments, this LiPON layer is about 2.7 microns. In some embodiments, this LiPON layer is about 2.8 microns. In some embodiments, this LiPON layer is about 2.9 microns. In some embodiments, this LiPON layer is about 3 microns. In some embodiments, this LiPON layer is about 3.5 microns. In some embodiments, this LiPON layer is about 4 microns. In some embodiments, this LiPON layer is about 4.5 microns. In some embodiments, this LiPON layer is about 5 microns. In some embodiments, this LiPON layer is about 5.5 microns. In some embodiments, this LiPON layer is about 6 microns. In some embodiments, this LiPON layer is about 7 microns. In some embodiments, this LiPON layer is about 8 microns. In some embodiments, this LiPON layer is about 7 microns. In some embodiments, this LiPON layer is about 9 microns. In some embodiments, this LiPON layer is about 10 microns. In some embodiments, this LiPON layer is more than 10 microns.

In some embodiments, the plating station performs electroplating at densities of about 0.9 mA/cm2 and voltage of about 40 mV at 0.6 mA between a lithium counterelectrode and the plated lithium of the anode.

In some embodiments of the invention, the lithium is conducted through a liquid propylene carbonate/LiPF6 electrolyte solution and the LiPON barrier/electrolyte layer for the lithium to be plated onto the anode connector. In some embodiments of the invention, the lithium is conducted through a liquid propylene carbonate/LiPF6 electrolyte solution and the LiPON barrier/electrolyte layer for the lithium to be plated onto the cathode connector.

Some embodiments of the invention include an apparatus that includes a battery having an anode, a cathode, and an electrolyte structure, wherein the anode includes an anode material that includes lithium and a LiPON barrier/electrolyte layer covering at least a portion of the anode; the cathode includes a cathode material that includes lithium and a LiPON barrir/electrolyte layer covering at least a portion of the cathode; and the electrolyte structure includes a polymer electrolyte material sandwiched between the LiPON barrier/electrolyte layer covering the anode and the LiPON barrier/electrolyte layer covering the cathode.

In some embodiments of the apparatus, the cathode material includes LiCoO₂ deposited on a cathode contact material, and then the LiPON barrier/electrolyte layer covering the cathode is deposited.

In some embodiments of the apparatus, the lithium anode material is plated onto a copper anode contact through LiPON barrier/electrolyte layer covering the anode.

In some embodiments of the apparatus, the anode material is deposited on both major faces of a metal sheet at least partially covered by the LiPON barrier/electrolyte layer.

In some embodiments of the apparatus, the cathode material is deposited on both major faces of a metal sheet and is at least partially covered by the LiPON barrier/electrolyte layer.

In some embodiments of the apparatus, the cathode contact material includes a metal mesh around which the cathode material is deposited.

In some embodiments of the apparatus, the lithium anode material is plated onto both major faces of an anode contact foil through LiPON barrier/electrolyte layer covering the anode contact layer.

In some embodiments of the apparatus, the lithium anode material is plated onto a first major face of a contact foil through LiPON barrier/electrolyte layer covering the contact foil the lithium cathode material is deposited onto a second major face of the contact foil, and the LiPON barrier/electrolyte layer covering the cathode is then deposited by sputtering.

In some embodiments of the apparatus, the lithium cathode material is deposited onto both major faces of a cathode contact foil, and the LiPON barrier/electrolyte layer covering the cathode is then deposited by sputtering.

In some embodiments of the apparatus, the lithium cathode material is deposited onto both major faces of a cathode contact mesh, and the LiPON barrier/electrolyte layer covering the cathode is then deposited by sputtering.

In some embodiments, another aspect of the invention includes a method that includes providing a first sheet that includes an anode material that includes lithium and a LiPON barrier/electrolyte layer covering the anode material; providing a second sheet that includes a cathode material that includes lithium and a LiPON barrier/electrolyte layer covering the cathode material; and sandwiching a polymer electrolyte material between the LiPON barrier/electrolyte layer covering the anode material of the first sheet and the LiPON barrier/electrolyte layer covering the cathode material of the first cathode sheet.

Some embodiments of the method further include providing a third sheet that includes an anode material that includes lithium and a LiPON barrier/electrolyte layer covering the anode material; providing a fourth sheet that includes a cathode material that includes lithium and a LiPON barrier/electrolyte layer covering the cathode material; sandwiching a polymer electrolyte material between the LiPON barrier/electrolyte layer covering the anode material of the third sheet and the LiPON barrier/electrolyte layer covering the cathode material of the fourth sheet; and sandwiching a polymer electrolyte material between the LiPON barrier/electrolyte layer covering the anode material of the first sheet and the LiPON barrier/electrolyte layer covering the cathode material of the fourth sheet.

In some embodiments of the method, the anode is deposited as a layer on a copper anode contact layer through a LiPON layer.

In some embodiments of the method, the deposition of a lithium anode is done by electroplating in a propylene carbonate/LiPF6 electrolyte solution.

In some embodiments of the method, the first sheet includes a cathode material on a face opposite the anode material and a LiPON barrier/electrolyte layer covering the cathode material, and the second sheet includes an anode material that includes lithium and a LiPON barrier/electrolyte layer covering the anode material, and the method further includes providing a third sheet that includes an anode material that includes lithium and a LiPON barrier/electrolyte layer covering the anode material on a first face, and an anode material that includes lithium and a LiPON barrier/electrolyte layer covering the anode material on a second face opposite the first face; and sandwiching a polymer electrolyte material between the LiPON barrier/electrolyte layer covering the anode material of the first sheet and the LiPON barrier/electrolyte layer covering the cathode material of the third sheet.

In some embodiments, another aspect of the invention includes an apparatus that includes a first sheet that includes an anode material that includes lithium and a LiPON barrier/electrolyte layer covering the anode material; a second sheet that includes a cathode material that includes lithium and a LiPON barrier/electrolyte layer covering the cathode material; and means for sandwiching a polymer electrolyte material between the LiPON barrier/electrolyte layer covering the anode material of the first sheet and the LiPON barrier/electrolyte layer covering the cathode material of the first cathode sheet.

Some embodiments of this apparatus include a third sheet that includes an anode material that includes lithium and a LiPON barrier/electrolyte layer covering the anode material; a fourth sheet that includes a cathode material that includes lithium and a LiPON barrier/electrolyte layer covering the cathode material; means for sandwiching a polymer electrolyte material between the LiPON barrier/electrolyte layer covering the anode material of the third sheet and the LiPON barrier/electrolyte layer covering the cathode material of the fourth sheet; and means for sandwiching a polymer electrolyte material between the LiPON barrier/electrolyte layer covering the anode material of the first sheet and the LiPON barrier/electrolyte layer covering the cathode material of the fourth sheet.

In some embodiments, the invention includes a method that includes providing a first sheet that includes a substrate, a cathode material, an anode current collector, an optional anode material, and an electrolyte layer separating the cathode material from the anode current collector; and performing a one or more material removal operations through the cathode material, the anode current collector, and the electrolyte layer separating the cathode material from the anode current collector, and removing a first portion of the substrate but not through a second portion of the substrate so as to leave a first plurality of battery cells that are separated from one another but wherein a plurality of the first plurality of battery cells remains attached to at least a single un-separated part of the first sheet.

Some embodiments of the method further include depositing a second material on the sheet to cover the plurality of cells at least on their sides.

Some embodiments of the method further include performing a first material-removal operation to remove a sub-portion of the second material to separate a plurality of cells from each other.

In some embodiments, the second material is an electrical insulator deposited to passivate the cells.

In some embodiments, the second material includes LiPON.

In some embodiments, the material-removal operations include laser ablation.

In some embodiments, the material-removal operations include photolithography.

In some embodiments, the material-removal operations form trenches between cells having a width of about 10 microns or less.

Some embodiments of the method further include depositing a passivation material on the sheet to cover the plurality of cells at least on their sides.

In some embodiments, the invention includes an apparatus that includes a source of a first sheet that includes a substrate, a cathode material, and anode current collector, an optional anode material, and an electrolyte layer separating the cathode material from the anode current collector; and means for removing material through the cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet.

Some embodiments of the apparatus further include means for depositing a second material on the sheet to cover the plurality of cells at least on their sides; and means for removing material a sub-portion of the second material to separate a plurality of cells from each other.

Some embodiments of the apparatus further include means for depositing a second material on the sheet to cover the plurality of cells at least on their sides.

In some embodiments, the second material is an electrical insulator deposited to passivate the cells. In some embodiments, the second material includes LiPON. In some embodiments, the means for removing include laser ablation. In some embodiments, the means for removing include photolithography. In some embodiments, the material-removal operations form trenches between cells having a width of about 10 microns or less.

In some embodiments, the invention includes an apparatus that includes a source of a first sheet that includes a substrate, a cathode material, an anode current collector, an optional anode material, and an electrolyte layer separating the cathode material from the anode current collector; and a first material removal station configured to remove the cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet.

Some embodiments of the apparatus further include a deposition station that deposits a passivation material on the sheet to cover the plurality of cells at least on their sides; and a second material removal station configured to remove a sub-portion of the second material to separate a plurality of cells from each other. Alternatively, the method and apparatus may comprise the further deposition station that deposits a passivation material on the sheet to cover the plurality of cells at least on their sides as noted above, and the first material removal station may be positioned after the further deposition station and configured to remove the passivation material, the cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet.

In some embodiments, the passivation material includes one or more metal layers alternating with one or more polymer layers.

In some embodiments, first sheet includes a cathode material on a face opposite the anode material and a LiPON barrier/electrolyte layer covering the cathode material, and the second sheet includes an anode material that includes lithium and a LiPON barrier/electrolyte layer covering the anode material; and the apparatus further includes a third sheet that includes an anode material that includes lithium and a LiPON barrier/electrolyte layer covering the anode material on a first face, and an anode material that includes lithium and a LiPON barrier/electrolyte layer covering the anode material on a second face opposite the first face; and means for sandwiching a polymer electrolyte material between the LiPON barrier/electrolyte layer covering the anode material of the first sheet and the LiPON barrier/electrolyte layer covering the cathode material of the third sheet.

It is to be understood that the above description is intended to be illustrative, and not restrictive. Although numerous characteristics and advantages of various embodiments as described herein have been set forth in the foregoing description, together with details of the structure and function of various embodiments, many other embodiments and changes to details will be apparent to those of skill in the art upon reviewing the above description. The scope of the invention should be, therefore, determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

The following items also embodiments of the invention:
1. A method for producing a thin film lithium battery comprising: a) providing a first sheet that includes a substrate; and b) applying a cathode current collector, a cathode material, an anode current collector, and an electrolyte layer separating the cathode material from the anode current collector to the substrate; wherein at least one of the layers contains lithiated compounds; and wherein the configuration of at least one of the layers containing lithiated compounds is patterned at least in part by a photolithography operation comprising removal of a photoresist material from the layer containing lithiated compounds by a process including a wet chemical treatment.
2. The method of item 1, wherein the layer containing lithiated compounds to be patterned at least in part by a photolithography operation is the cathode material.
3. The method of item 2, wherein the cathode material comprises LiCoO₂
4. The method of item 2, wherein the configuration of the cathode material comprises a sidewall having a positive slope.
5. The method of item 4, wherein slope of the cathode material is from about 20 to about 70 degrees off normal.
6. The method of item 1, wherein the layer containing lithiated compounds to be patterned at least in part by a photolithography operation is the electrolyte.
7. The method of item 6, wherein the electrolyte comprises LiPON.
8. The method of item 7, wherein the wet chemical treatment comprises application of a non-aqueous solvent.
9. The method of item 8, wherein the wet chemical treatment additionally comprises application of plasma O₂ chemistries.
10. The method of item 1, wherein the photolithography operation comprises
   a) applying a photoresist material to the surface of at least one of the layers containing lithiated compounds,
   b) processing the photoresist material to provide a pattern,
   c) applying a developer to remove portions of the photoresist material, thereby defining masked and unmasked portions of the layer containing lithiated compounds,
   d) removing unmasked portions of the layer containing lithiated compounds, and
   e) removing the remaining photoresist material from the layer containing lithiated compounds by a wet chemical treatment.
11. The method of item 1, wherein the photoresist is a positive tone photoresist.
12. The method of item 1, wherein the photoresist is a negative tone photoresist.
13. The method of item 1, wherein the wet chemical treatment comprises application of an organic solvent.
14. The method of item 13, wherein the organic solvent comprises N- Methylpyrrolidone.
15. The method of item 1, wherein the patterning of the layer containing lithiated compounds by a photolithography operation is carried out within about 72 hours of initial formation of the layer containing lithiated compounds.
16. The method of item 1, wherein the patterning of the layer containing lithiated compounds by a photolithography operation is carried out within about 48 hours of initial formation of the layer containing lithiated compounds.
17. The method of item 1, wherein the cathode material comprises LiCoO₂, the electrolyte comprises LiPON, and the electrolyte over cathode overlay/underlay distances are from about 5 to about 20 microns per edge.
18. The method of item 17, wherein the electrolyte completely overlays the cathode.
19. The method of item 1, wherein at least two of the process steps of applying the cathode current collector, the cathode material, the anode current collector, and the electrolyte layer are carried out in different processing apparatus, wherein during the production of the thin layer lithium battery, at least one layer containing lithiated compounds is exposed to ordinary air conditions between process steps.
20. The method of item 1, wherein the patterning of the layer containing lithiated compounds by a photolithography operation is carried out within about 72 hours of initial formation of the layer containing lithiated compounds.
21. A method comprising: providing a first sheet that includes a substrate, a cathode current collector, a cathode material, an anode current collector, and an electrolyte layer separating the cathode material from the anode current collector; and performing one or more material removal operations to remove material through the cathode current collector, cathode material, the anode current collector, and the electrolyte layer separating the cathode material from the anode current collector, and removing a first portion of the substrate but not through a second portion of the substrate so as to leave a first plurality of battery cells that are separated from one another but wherein a plurality of the first plurality of battery cells remains attached to at least a single unseparated part of the first sheet.
22. The method of item 21, wherein the one or more material removal operations comprises a laser ablating operation.
23. The method of item 21, wherein the one or more material removal operations comprises a photolithography operation.
24. The method of item 21, further comprising: depositing a second material on the sheet to cover the plurality of cells at least on their sides.
25. The method of item 24, further comprising: performing one or more material removal operations to remove a sub-portion of the second material to separate a plurality of cells from each other.
26. The method of item 24, wherein the second material is an electrical insulator deposited to passivate the cells.
27. The method of item 24, wherein the second material includes LiPON.
28. The method of item 24, wherein the second material includes a polymer.
29. An apparatus comprising: a source of a first sheet that includes a substrate, a cathode current collector, a cathode material, an anode current collector, and an electrolyte layer separating the cathode material from the anode current collector; and material removal means for removing material through the cathode current collector, cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet.
30. The apparatus of item 29, wherein the material removal means comprises a laser ablating means.
31. The apparatus of item 29, wherein the material removal means comprises a photolithography means.
32. An apparatus comprising: a source of a first sheet that includes a substrate, a cathode current collector, a cathode material, an anode current collector, and an electrolyte layer separating the cathode material from the anode current collector; and a first material removal station configured to remove the cathode current collector, cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet.
33. The apparatus of item 32, wherein the material removal station comprises a laser ablating station.
34. The apparatus of item 32, wherein the material removal station comprises a photolithography station.
35. The apparatus of item 32, further comprising: a deposition station that deposits a passivation material on the sheet to cover the plurality of cells at least on their sides; and a second material removal station configured to remove a sub-portion of the second material to separate a plurality of cells from each other.
36. The apparatus of item 35, wherein the passivation material includes one or more metal layers alternating with one or more polymer layers.

## Claims

1. A method comprising:
providing a first sheet that includes a substrate, a cathode current collector, a cathode material, an anode current collector, and an electrolyte layer separating the cathode material from the anode current collector; and
performing one or more material removal operations to remove material through the cathode current collector, cathode material, the anode current collector, and the electrolyte layer separating the cathode material from the anode current collector, and removing a first portion of the substrate but not through a second portion of the substrate so as to leave a first plurality of battery cells that are separated from one another but wherein a plurality of the first plurality of battery cells remains attached to at least a single unseparated part of the first sheet,
whereby sufficient amounts of the substrate are removed so that final separation of the cells may be accomplished by upward or downward force on individual cells.

2. The method of claim 1, wherein the one or more material removal operations comprises a laser ablating operation.

3. The method of claim 1, wherein the one or more material removal operations comprises a photolithography operation.

4. The method of claim 1, further comprising:
depositing a second material on the sheet to cover the plurality of cells at least on their sides.

5. The method of claim 4, further comprising:
performing one or more material removal operations to remove a sub-portion of the second material to separate a plurality of cells from each other.

6. The method of claim 4, wherein the second material is an electrical insulator deposited to passivate the cells.

7. The method of claim 4, wherein the second material includes LiPON.

8. The method of claim 4, wherein the second material includes a polymer.

9. An apparatus comprising:
a source of a first sheet that includes a substrate, a cathode current collector, a cathode material, an anode current collector, and an electrolyte layer separating the cathode material from the anode current collector; and
material removal means for removing material through the cathode current collector, cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet,
whereby the material removal means is configured so that sufficient amounts of the substrate may be removed so that final separation of the cells may be accomplished by upward or downward force on individual cells.

10. The apparatus of claim 9, wherein the material removal means comprises a laser ablating means.

11. The apparatus of claim 9, wherein the material removal means comprises a photolithography means.

12. An apparatus comprising:
a source of a first sheet that includes a substrate, a cathode current collector, a cathode material, an anode current collector, and an electrolyte layer separating the cathode material from the anode current collector; and
a first material removal station configured to remove the cathode current collector, cathode material, the anode current collector, and the electrolyte layer separating the cathode material from the anode current collector, and through a first portion of the substrate but not through a second portion of the substrate so as to leave a plurality of battery cells that are separated from one another but each one of the plurality of battery cells remaining attached to at least a single part of the first sheet so that sufficient amounts of the substrate may be removed so that final separation of the cells may be accomplished by upward or downward force on individual cells.

13. The apparatus of claim 12, wherein the material removal station comprises a laser ablating station.

14. The apparatus of claim 12, wherein the material removal station comprises a photolithography station.

15. The apparatus of claim 12, further comprising:
a deposition station that deposits a second material that is a passivation material on the sheet to cover the plurality of cells at least on their sides; and
a second material removal station configured to remove a sub-portion of the second material to separate a plurality of cells from each other, preferably wherein the passivation material includes one or more metal layers alternating with one or more polymer layers.
